# EUROPEAN PATENT SPECIFICATION

(11) **EP 0 798 978 B1**
(45) Date of publication and mention of the grant of the patent: **09.09.1998**
(21) Application number: 95942182.7
(22) Date of filing: 13.12.1995
(51) Int. Cl.: A47J 43/28, A47G 21/02

(54) **SERVER**
SERVIERVORRICHTUNG
COUVERT DE SERVICE

(30) Priority: 14.12.1994 BE 9401128
(43) Date of publication of application: 08.10.1997
(73) Proprietor: Vandamme, Paul, 1080 Molenbeek (BE)
(72) Inventor: Vandamme, Paul, 1080 Molenbeek (BE)
(74) Representative: Konings, Lucien Marie Cornelis Joseph
(86) International application number: PCT/EP95/05040
(87) International publication number: WO 96/18334

(56) References cited:
- DE-C- 463 400
- DE-U- 8 704 466
- FR-A- 2 703 231
- US-A- 2 775 477
- US-A- 5 005 293

## Description

The invention relates to a server for picking up and discharging strand shaped material like spaghetti. Such a server is dislosed in document DE-U-8704466.

The invention has the object to provide a server for the easy and/or well dosed bringing over of strand shaped material, like spaghetti, from a pot, pan or the like holder into another holder and/or on dishes. This object is achieved by means of the server according to independent claim 1.

Said characterizing feature and other features will be elucidated in the following description with reference to a drawing, in which:
Figures 1, 7 and 9 each show a perspective view of each time another server according to the invention;
Figures 2, 3 and 4 show side and front views of the server of figure 1;
Figures 5, 6 and 11 are variations of figure 4;
Figures 8 and 10 are sections over the lines VIII and X of figures 7 and 9 respectively.

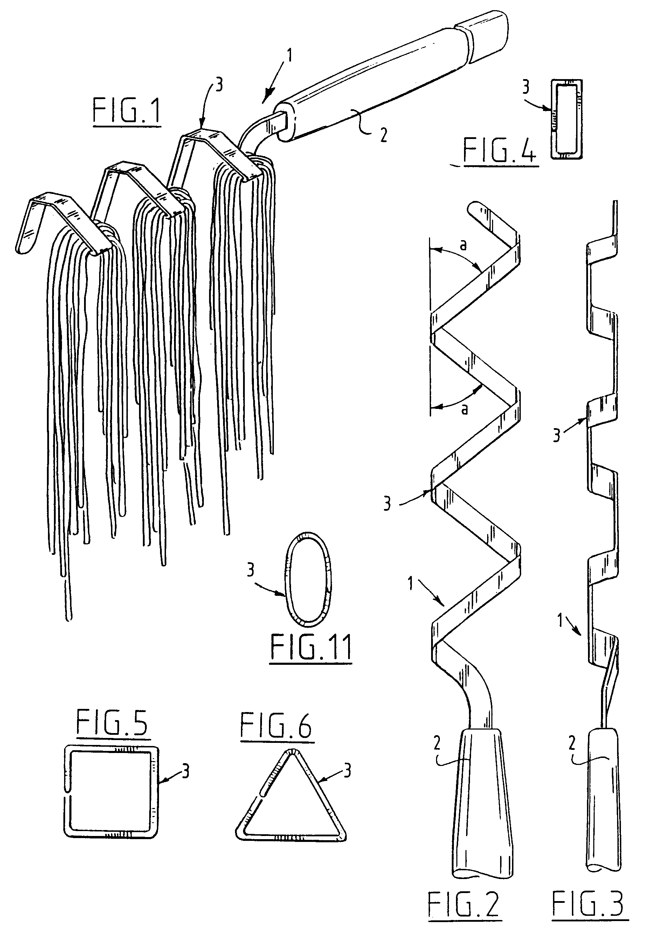

The servers of figures 1, 7 and 9 each consist of a handle 2 having fixed thereto an unround screw 3 with preferably three threads. However, the screw may be shorter or longer and have one, two, four or even more threads.

The pitch angle a is preferably situated between 80° and 30°, more preferably between 60° and 35° and even better in the order of magnitude of 45°.

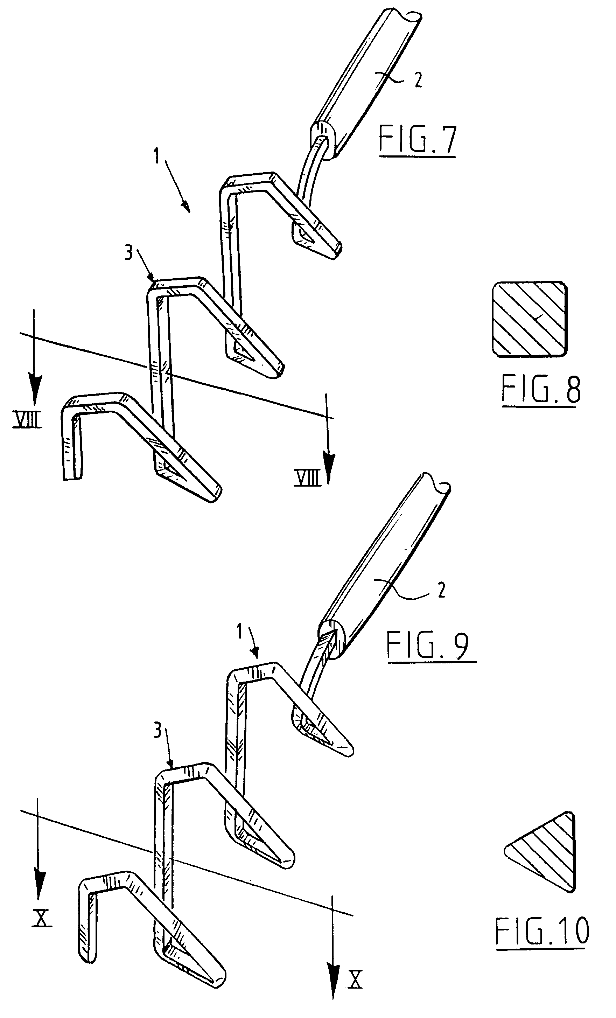

The screw is unround, e.g. square (figure 5), triangular (figure 6) or oval (figure 7). The rectangular screw of figures 1, 7 and 9 operates particularly well. The screw is preferably made of a stainless steel bar plated with silver or not plated, having a square (figure 8), triangular (figure 10), round (not shown) or other cross section. Preferably a flat rectangular cross section is used (figures 1-6).

Contrary to figure 1 the spaghetti strands in reality will extend in different directions and the jumble of strands will grow thicker and thicker by winding the more the server is rotated in the picking up direction. During discharge the server is rotated in the opposite direction.

## Claims

1. Server for picking up and discharging strand shaped material, like spaghetti, said server comprising at its one end a handle and at its other end a food engaging portion, characterized in that said food engaging portion comprises an unround screw (3).

2. Server according to claim 1, characterized in that the screw (3) has a rectangular section.

3. Server according to claim 1 or 2, characterized in that the screw (3) has three threads.

4. Server according to claim 1, 2 or 3, characterized in that the pitch angle (a) of said unround screw (3) is situated between 60° and 35°.

5. Server according to any of the preceding claims, characterized in that the unround screw (3) is made of stainless steel bar.

6. Server according to any of the preceding claims, characterized in that the unround screw (3) has a flat rectangular cross section.

## Patentansprüche

1. Servierer zum Aufnehmen und Abgeben von einer strähnenförmigen Substanz, wie Spaghetti, welcher an seinem einen Ende einen Handgriff und an seinem anderen Ende einen Nahrung angreifenden Teil umfasst, **dadurch gekennzeichnet, dass** der Nahrung angreifende Teil eine unrunde Schraube (3) umfasst.

2. Servierer nach Anspruch 1, **dadurch gekennzeichnet, dass** die Schraube (3) einen rechteckigen Querschnitt hat.

3. Servierer nach Anspruch 1 oder 2, **dadurch gekennzeichnet, dass** die Schraube (3) drei Schraubegange hat.

4. Servierer nach Anspruch 1, 2 oder 3, **dadurch gekennzeichnet, dass** der Neigungswinkel (a) der urrunden Schraube (3) zwischen 60° und 35° liegt.

5. Servierer nach einem der vorhergehenden Ansprüche, **dadurch gekennzeichnet, dass** die unrunde Schraube (3) aus einem rostfreien Stahlstab hergestellt ist.

6. Servierer nach einem der vorhergehenden Ansprüche, **dadurch gekennzeichnet, dass** die unrunde Schraube (3) einen flachen Rechteckquerschnitt hat.

## Revendications

1. Serveur pour prendre et remettre une substance étirée, comme des spaghettis, étant muni à une extrémité d'une poignée et à l'autre extrémité d'une partie pour saisir la nourriture, **caractérisé en ce que** la partie pour saisir la nourriture comporte une vis non ronde.

2. Serveur selon la revendication 1, **caractérisé en ce que** la vis (3) présente une section rectangulaire.

3. Serveur selon la revendication 1 ou 2, **caractérisé en ce que** la vis (3) comporte trois pas de vis.

4. Serveur selon la revendication 1, 2 ou 3, **caractérisé en ce que** l'angle (a) de la vis (3) non ronde se situe entre 60° et 35°.

5. Serveur selon une des revendications précédentes, **caractérisé en ce que** la vis (3) non ronde est fabriquée d'une tige en acier inoxydable.

6. Serveur selon une des revendications précédentes, **caractérisé en ce que** la vis (3) non ronde représente une section transversale rectangulaire plate.
